(19) Europäisches Patentamt
European Patent Office
Office européen des brevets

(11) **EP 4 645 434 A1**

(12) **EUROPEAN PATENT APPLICATION**

(43) Date of publication:
**05.11.2025 Bulletin 2025/45**

(21) Application number: **25171694.0**

(22) Date of filing: **22.04.2025**

(51) International Patent Classification (IPC):
*H01M 4/131* (2010.01)   *H01M 4/36* (2006.01)
*H01M 4/525* (2010.01)   *H01M 4/58* (2010.01)
*H01M 4/62* (2006.01)   *H01M 10/0525* (2010.01)
*H01M 4/02* (2006.01)

(52) Cooperative Patent Classification (CPC):
H01M 4/366; H01M 4/131; H01M 4/364;
H01M 4/525; H01M 4/5825; H01M 4/625;
H01M 4/628; H01M 10/0525; H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.04.2024 KR 20240056969**

(71) Applicant: SAMSUNG SDI CO., LTD.
Yongin-si, Gyeonggi-do 17084 (KR)

(72) Inventors:
• **Doo, Sungwook**
  **Yongin-si (KR)**

• **Lee, Soonrewl**
  **Yongin-si (KR)**
• **Kim, Young-Ki**
  **Yongin-si (KR)**
• **Choi, Aram**
  **Yongin-si (KR)**
• **Kim, Sangmi**
  **Yongin-si (KR)**
• **Kang, Gwiwoon**
  **Yongin-si (KR)**

(74) Representative: **Marks & Clerk LLP**
**15 Fetter Lane**
**London EC4A 1BW (GB)**

(54) **POSITIVE ELECTRODE FOR RECHARGEABLE LITHIUM BATTERY, AND RECHARGEABLE LITHIUM BATTERY INCLUDING THE SAME**

(57) Examples of the disclosure include a positive electrode for a rechargeable lithium battery, and a rechargeable lithium battery including the positive electrode. Examples include a positive electrode for a rechargeable lithium battery including a current collector, a first active material layer on the current collector, and a second active material layer on the first active material layer. The first active material layer includes a first particle and a third particle, the second active material layer includes a first particle and a second particle, the first particle is in the form of a single particle, and the second particle is in the form of a secondary particle. The first particle and the second particle are olivine-based particles, and the third particle is a layered particle.

## FIG. 6

**Description**

BACKGROUND

Examples of the present disclosure relate to a positive electrode for a rechargeable lithium battery, and a rechargeable lithium battery including the positive electrode. Examples of the disclosure relate to a positive electrode including a positive electrode active material layer having a double layer structure, and a rechargeable lithium battery including the positive electrode active material layer.

The increasing use of battery-powered electronics, such as, e.g., mobile phones, laptop computers, electric vehicles, and the like, has driven a rise in demand for rechargeable batteries provided with high energy density and high capacity. Accordingly, improving the performance of rechargeable lithium batteries may be advantageous.

Rechargeable lithium batteries include a positive electrode and a negative electrode, each including an active material that allows intercalation and deintercalation of lithium ions, and an electrolyte solution, and produce electrical energy from redox reactions that take place as lithium ions are intercalated into or deintercalated from the positive electrode and the negative electrode.

SUMMARY

Examples of the present disclosure include a positive electrode having high energy density, high low-temperature characteristics, and high lifetime characteristics.

Examples of the present disclosure also include a rechargeable lithium battery having high energy density, high low-temperature characteristics, and high lifetime characteristics.

An example embodiment of the present disclosure includes a positive electrode for a rechargeable lithium battery, the positive electrode including a current collector and an active material layer on the current collector, wherein the active material layer includes a first particle, a second particle, and a third particle. The active material layer includes a first active material layer and a second active material layer, which are stacked, e.g., sequentially stacked, on the current collector. The first active material layer includes the first particle and the third particle, and the second active material layer includes the first particle and the second particle. The first particle is in the form of a single particle, and the second particle is in the form of a secondary particle. The first particle contains a compound of Formula 1 below, the second particle contains a compound of Formula 2 below, and the third particle contains a compound of Formula 3 below.

$$\text{Formula 1:} \qquad \text{Li}_{a1}\text{Mn}_{z1}\text{Fe}_{x1}\text{B1}_{y1}\text{PO}_{4-b1}$$

In Formula 1 above, $0.8 \leq a1 \leq 1.2$, $0.5 \leq z1 \leq 0.899$, $0.1 \leq x1 \leq 0.499$, $0.001 \leq y1 \leq 0.05$, $0 \leq b1 \leq 0.05$, and $x1 + y1 + z1 = 1$ are satisfied. In Formula 1 above, B1 is or includes at least one of Ti, Mg, V, Nb, and Al.

$$\text{Formula 2:} \qquad \text{Li}_{a2}\text{Mn}_{z2}\text{Fe}_{x2}\text{B2}_{y2}\text{PO}_{4-b2}$$

In Formula 2 above, $0.8 \leq a2 \leq 1.2$, $0.5 \leq z2 \leq 0.899$, $0.1 \leq x2 \leq 0.499$, $0.001 \leq y2 \leq 0.05$, $0 \leq b2 \leq 0.05$, and $x2 + y2 + z2 = 1$ are satisfied, and in Formula 2 above, B2 is or includes at least one of Ti, Mg, V, Nb, and Al.

$$\text{Formula 3:} \qquad \text{Li}_{a3}\text{Ni}_{x3}\text{Co}_{y3}\text{Mn}_{z3}\text{B3}_{w3}\text{O}_{2-b3}$$

In Formula 3 above, $0.8 \leq a3 \leq 1.2$, $0.4 \leq x3 \leq 0.8$, $0.01 \leq y3 \leq 0.2$, $0.01 \leq z3 \leq 0.5$, $0 \leq w3 \leq 0.1$, $0 \leq b3 \leq 0.05$, and $x3 + y3 + z3 + w3 = 1$ are satisfied. In Formula 3 above, B3 is or includes at least one of Mg, Ti, V, Al, Zr, Mo, and Nb.

In an example embodiment of the present disclosure, a positive electrode for a rechargeable lithium battery includes a current collector, and an active material layer on the current collector, wherein the active material layer includes a first particle, a second particle, a third particle, a first binder, a second binder, a first conductive material, and a second conductive material. The active material layer may include a first active material layer and a second active material layer, which are stacked, e.g., sequentially stacked, on the current collector. The first active material layer may include the first particle, the third particle, the first binder, and the first conductive material, and the second active material layer may include the first particle, the second particle, the second binder, and the second conductive material. Each, or at least one, of the first particle and the third particle may be in the form of a single particle. The first particle may contain a compound of Formula 1 below, the second particle may contain a compound of Formula 2 below, and the third particle may contain a compound of Formula 3 below.

$$\text{Formula 1:} \qquad \text{Li}_{a1}\text{Mn}_{z1}\text{Fe}_{x1}\text{B1}_{y1}\text{PO}_{4-b1}$$

In Formula 1 above, $0.8 \leq a1 \leq 1.2$, $0.5 \leq z1 \leq 0.899$, $0.1 \leq x1 \leq 0.499$, $0.001 \leq y1 \leq 0.05$, $0 \leq b1 \leq 0.05$, and $x1 + y1 + z1 = 1$ may be satisfied. In Formula 1 above, B1 may be or include at least one of Ti, Mg, V, Nb, and Al.

$$\text{Formula 2:} \qquad Li_{a2}Mn_{z2}Fe_{x2}B2_{y2}PO_{4-b2}$$

In Formula 2 above, $0.8 \leq a2 \leq 1.2$, $0.5 \leq z2 \leq 0.899$, $0.1 \leq x2 \leq 0.499$, $0.001 \leq y2 \leq 0.05$, $0 \leq b2 \leq 0.05$, and $x2 + y2 + z2 = 1$ may be satisfied, and in Formula 2 above, B2 may be or include at least one of Ti, Mg, V, Nb, and Al.

$$\text{Formula 3:} \qquad Li_{a3}Ni_{x3}Co_{y3}Mn_{z3}B3_{w3}O_{2-b3}$$

In Formula 3 above, $0.8 \leq a3 \leq 1.2$, $0.4 \leq x3 \leq 0.8$, $0.01 \leq y3 \leq 0.2$, $0.01 \leq z3 \leq 0.5$, $0 \leq w3 \leq 0.1$, $0 \leq b3 \leq 0.05$, and $x3 + y3 + z3 + w3 = 1$ may be satisfied. In Formula 3 above, B3 may be or include at least one of Mg, Ti, V, Al, Zr, Mo, and Nb.

In an example embodiment of the present disclosure, a rechargeable lithium battery includes the positive electrode, a negative electrode including a negative electrode current collector and a negative electrode active material layer on the negative electrode current collector, and a separator between the positive electrode and the negative electrode.

At least some of the above and other features of the invention are set out in the claims.

BRIEF DESCRIPTION OF THE FIGURES

The accompanying drawings are included to provide a further understanding of the present disclosure, and are incorporated in and constitute a part of this specification. The drawings illustrate example embodiments of the present disclosure and, together with the description, serve to explain principles of the present disclosure. In the drawings:

FIG. 1 is a simplified conceptual view illustrating a rechargeable lithium battery according to example embodiments of the present disclosure;

FIGS. 2 to 5 are schematic views illustrating a rechargeable lithium battery according to an example embodiment, where FIG. 2 illustrates a cylindrical battery, FIG. 3 illustrates a prismatic battery, and FIGS. 4 and 5 illustrate pouch-type batteries;

FIG. 6 is a cross-sectional view illustrating a positive electrode for a rechargeable lithium battery, according to an example embodiment of the present disclosure;

FIG. 7 is an enlarged view illustrating a first active material layer of a positive electrode for a rechargeable lithium battery according to an example embodiment of the present disclosure;

FIG. 8 is an enlarged view illustrating a first active material layer of a positive electrode for a rechargeable lithium battery according to another example embodiment of the present disclosure;

FIG. 9 is an SEM image showing a first particle prepared in Preparation Example 1 of the present disclosure;

FIG. 10 is an SEM image showing a second particle prepared in Preparation Example 2 of the present disclosure; and

FIG. 11 is an SEM image showing a third particle prepared in Preparation Example 3 of the present disclosure.

DETAILED DESCRIPTION

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be directly on the other element or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D50) where a cumulative volume is about 50 volume% in a particle size distribution. The average particle diameter (D50) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, the average particle diameter (D50) value may be obtained through a calculation. Dissimilarly, a laser scattering method may be utilized to measure the average particle diameter (D50). In the laser scattering method, a target particle is distributed in a distribution solvent, introduced into a laser scattering particle-diameter measurement device (e.g., MT3000 commercially available from Microtrac, Inc), irradiated with ultrasonic waves of 28 kHz at a power of 60 W, and an average particle diameter (D50) is subsequently calculated in the 50% standard of particle diameter distribution in the measurement device.

When the terms "about" or "substantially" are used in this specification in connection with a numerical value, it is intended that the associated numerical value include a tolerance of $\pm 10\%$ around the stated numerical value. The expression "up to" includes amounts of zero to the expressed upper limit and all values therebetween. When ranges are specified, the range includes all values therebetween such as increments of 0.1%.

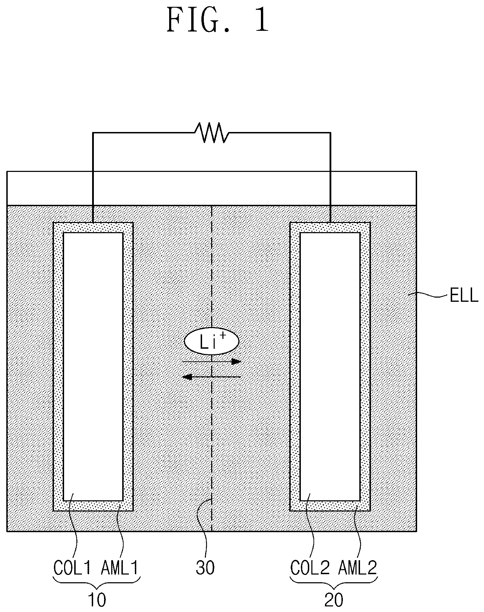

FIG. 1 is a cross-sectional view of a rechargeable lithium battery according to example embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be located between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be or include a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

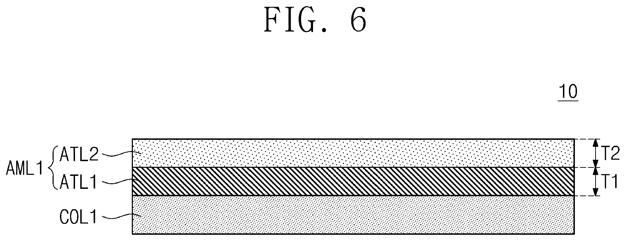

The positive electrode 10 for a rechargeable lithium battery includes a current collector COL1 and a positive electrode active material layer AML1 formed on the current collector COL1. The positive electrode active material layer AML1 includes a positive electrode active material, and may further include a binder and/or a conductive material. The positive electrode 10 according to example embodiments of the present disclosure is described in detail with reference to FIG. 6. Al may be included in the current collector COL1, but is not limited thereto.

## Negative Electrode 20

The negative electrode 20 for a rechargeable lithium battery may include a current collector COL2, and a negative electrode active material layer AML2 on the current collector COL2. The negative electrode active material layer AML2 may include a negative electrode active material, and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may be configured to attach the negative electrode active material particles to each other and also to attach the negative electrode active material to the current collector COL2. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material that is capable of being fibrous. For example, the dry binder may be or include at least one of polytetrafluoroethylene, polyvinylidene fluoride, a polyvinylidene fluoride-hexafluoropropylene copolymer, polyethylene oxide, or a combination thereof.

The conductive material may be configured to impart conductivity (e.g., electrical conductivity) to the electrode. Any material that does not cause chemical change (e.g., does not cause an undesirable chemical change in the rechargeable lithium battery), and that conducts electrons, can be used in the battery. Non-limiting examples thereof may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

The negative current collector COL2 may include at least one of a copper foil, a nickel foil, a stainless steel foil, a titanium foil, a nickel foam, a copper foam, a polymer substrate coated with a conductive metal, or a combination thereof.

## Negative Electrode Active Material

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon or a combination thereof. The crystalline carbon may be or include graphite such as non-shaped, sheet-shaped, flake-shaped, sphere-shaped, or fiber-shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, $SiO_x$ ($0 < x < 2$), a Si-Q alloy (where Q is or include at least one of an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include at least one of Sn, $SnO_2$, a Sn-based alloy, or a combination thereof.

The silicon-carbon composite may be or include a composite of silicon and amorphous carbon. According to an example embodiment, the silicon-carbon composite may be in the form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles, and an amorphous carbon coating layer on a surface of the core.

The Si-based negative electrode active material or the Sn-based negative electrode active material may be combined with a carbon-based negative electrode active material.

## Separator 30

Depending on the type of the rechargeable lithium battery, the separator 30 may be present between the positive electrode 10 and the negative electrode 20. The separator 30 may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator 30 may include a porous substrate and a coating layer including an organic material, an inorganic material, or a combination thereof on one or both surfaces of the porous substrate.

The porous substrate may be or include a polymer film formed of or including any one or more of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

## Electrolyte Solution ELL

The electrolyte solution ELL for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like.

The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, a double bond, an aromatic ring, or an ether bond), and the like; amides such as dimethylformamide; dioxolanes such as 1,3-dioxolane, 1,4-dioxolane, and the like; sulfolanes, and the like.

The non-aqueous organic solvents may be used alone or in combination of two or more solvents.

In addition, when using a carbonate-based solvent, a cyclic carbonate and a chain carbonate may be mixed and used, and the cyclic carbonate and the chain carbonate may be mixed in a volume ratio in a range of about 1:1 to about 1:9.

The lithium salt dissolved in the organic solvent is configured to supply lithium ions in a battery, to enable a basic operation of a rechargeable lithium battery, and to improve transportation of the lithium ions between positive and negative electrodes. Examples of the lithium salt include at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

## Rechargeable Lithium Battery

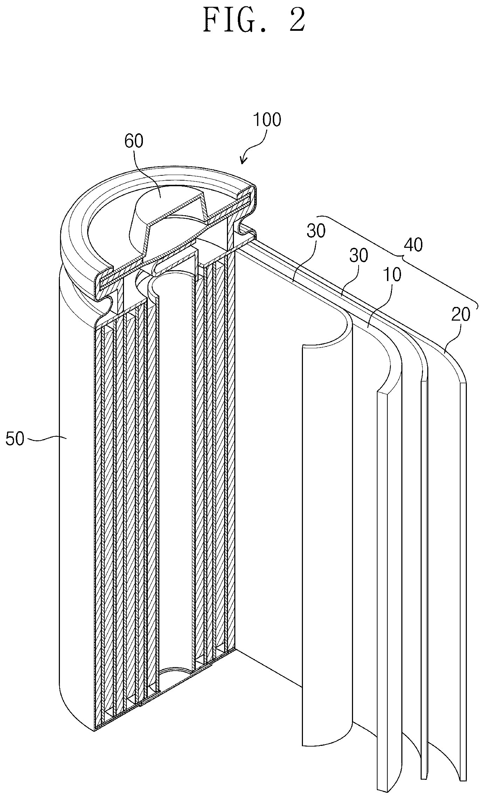

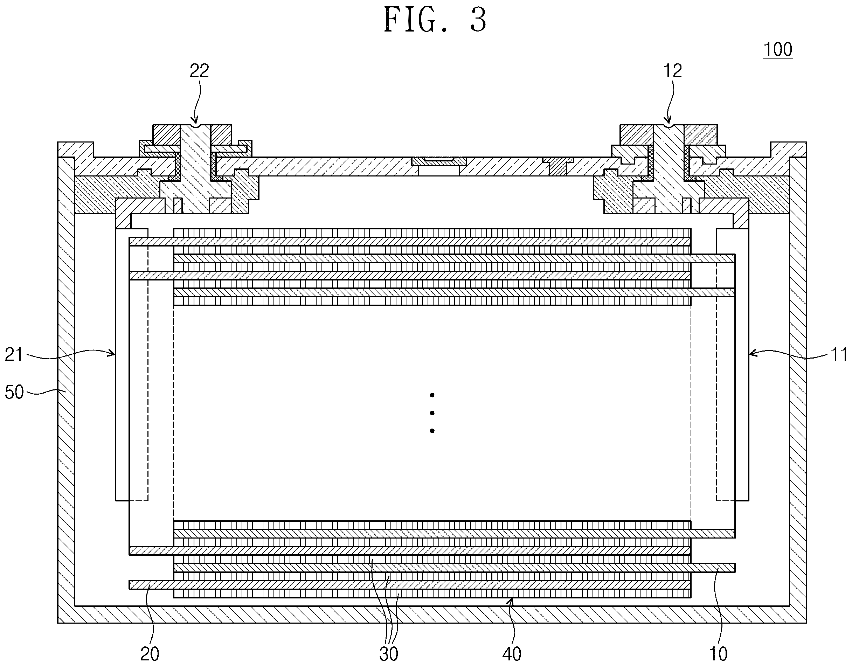

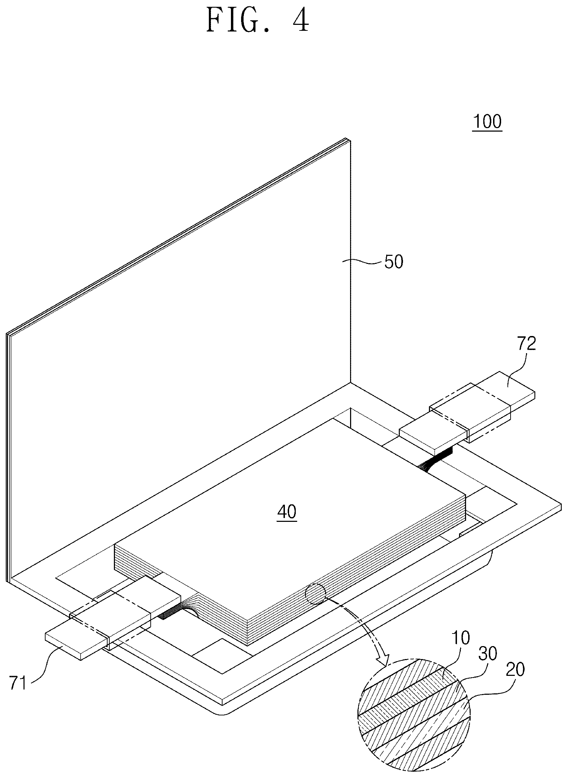

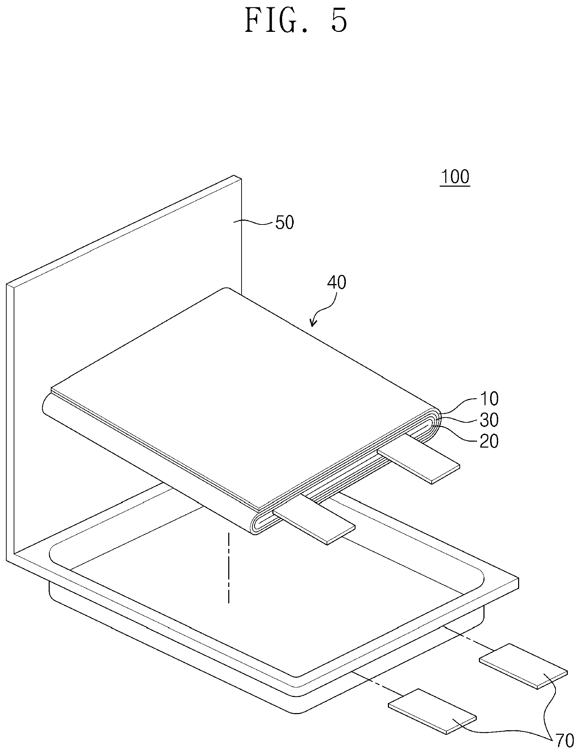

The rechargeable lithium battery may be classified into cylindrical, prismatic, pouch, or coin-type batteries, and the like depending on their shape. FIGS. 2 to 5 are schematic views illustrating a rechargeable lithium battery according to an example embodiment. FIG. 2 illustrates a cylindrical battery, FIG. 3 illustrates a prismatic battery, and FIGS. 4 and 5 illustrate pouch-type batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution (not shown). The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70 illustrated in FIG. 5, and may include, for example, a positive electrode tab 71 and a negative electrode tab 72 illustrated in FIG. 4, the electrode tabs 70/71/72 forming an electrical path for inducing the current formed in the electrode assembly 40 to the outside of the battery 100.

The rechargeable lithium battery according to an example embodiment may be applicable to, e.g., automobiles, mobile phones, and/or various types of electric devices, as non-limiting examples.

FIG. 6 is a cross-sectional view showing a positive electrode for a rechargeable lithium battery, according to example embodiments of the present disclosure.

Referring to FIG. 6, the positive electrode 10 for a rechargeable lithium battery includes the current collector COL1 (see FIG. 1) and the positive electrode active material layer AML1 (see FIG. 1) as described above. The positive electrode active material layer AML1 includes a first particle PTC1, a second particle PTC2, and a third particle PTC3. The positive electrode active material layer AML1 may further include a first binder BND1, a second binder BND2, a first conductive material CDM1, and a second conductive material CDM2.

Referring back to FIG. 6, the positive electrode active material layer AML1 includes the first active material layer ATL1 and the second active material layer ATL2, which are stacked, e.g., sequentially stacked, on the current collector COL1.

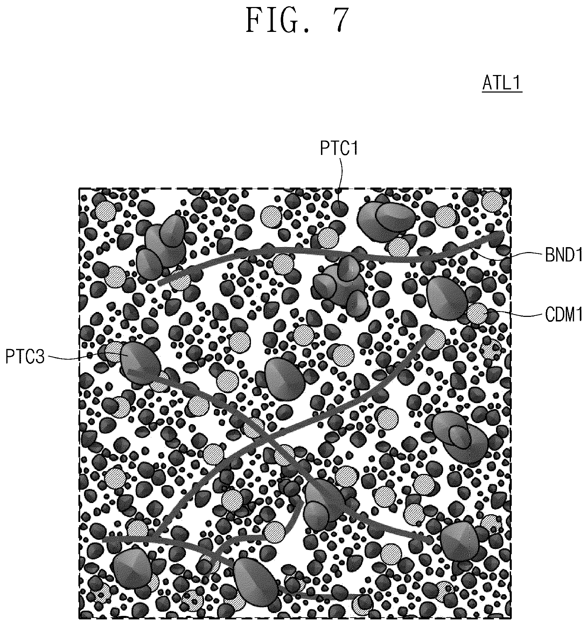

FIG. 7 is an enlarged view showing a first active material layer of a positive electrode for a rechargeable lithium battery according to an example embodiment of the present disclosure.

Referring to FIG. 7, the first active material layer ATL1 may include the first particle PTC1, the third particle PTC3, the first binder BND1, and the first conductive material CDM1. The first active material layer ATL1 may further include an additive that may constitute a sacrificial positive electrode.

The first binder BND1 may combine the first particle PTC1, the third particle PTC3, and the first conductive material CDM1. In addition, the first binder BND1 may stably fix the first active material layer ATL1 to the current collector COL1. For example, the first binder BND1 may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The first conductive material CDM1 may be configured to improve conductivity of the first active material layer ATL1. Any conductive material that does not cause chemical changes in the first active material layer ATL1 may be used as the first conductive material CDM1 without limitation. For example, the first conductive material CDM1 may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

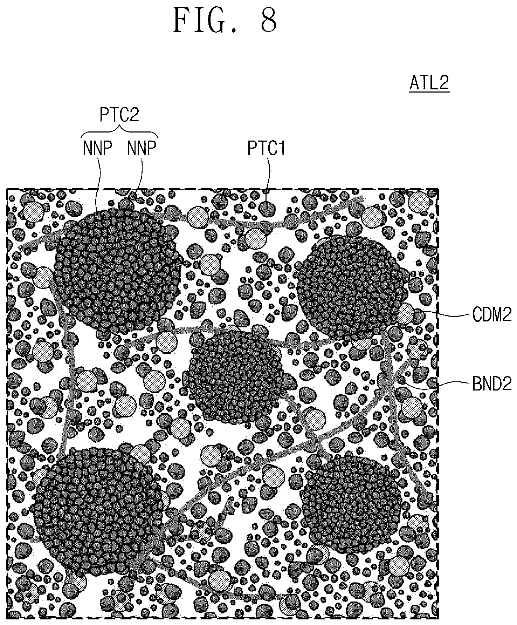

FIG. 8 is an enlarged view showing a second active material layer of a positive electrode for a rechargeable lithium battery according to an example embodiment of the present disclosure.

Referring to FIG. 8, the second active material layer ATL2 may include a first particle PTC1, a second particle PTC2, a second binder BND2, and a second conductive material CDM2. The second active material layer ATL2 may further include an additive that may constitute a sacrificial positive electrode.

The second binder BND2 may combine the first particle PTC1, the second particle PTC2, and the second conductive material CDM2. In addition, the second binder BND2 may stably fix the second active material layer ATL2 onto the first active material layer ATL1. In an example embodiment, the second binder BND2 may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but is not limited thereto.

The second conductive material CDM2 may be configured to improve conductivity of the second active material layer ATL2. Any conductive material that does not cause chemical changes in the second active material layer ATL2 may be used as the second conductive material CDM2 without limitation. In an example embodiment, the second conductive material CDM2 may include a carbon-based material such as or including at least one of natural graphite, artificial graphite, carbon black, acetylene black, ketjen black, a carbon fiber, a carbon nanofiber, and a carbon nanotube; a metal-based material including at least one of copper, nickel, aluminium, silver, etc. in a form of a metal powder or a metal fiber; a conductive polymer such as a polyphenylene derivative; or a mixture thereof.

Hereinafter, the first particle PTC1, the second particle PTC2, and the third particle PTC3 are described in more detail.

## First Particle PTC1

Referring to FIGS. 7, 8, and 9, the first particle PTC1 may be in the form of a single particle. For example, the single particle may indicate a single type of particle having no grain boundary inside thereof. The single particle may indicate one single particle morphologically present in an independent phase in which particles are not aggregated with one another, a particle having a monolith structure, a particle having a one-body structure, or a non-aggregated particle. For example, the single particle may be a single crystal. Alternatively, the single particle may be or include a particle containing several crystals. The single particle may be in a solely separated form. Alternatively, the single particle may be in the form in which about 2 to about 100 single particles are attached to one another.

In an example embodiment, the first particle PTC1 may be or include a first primary particle where single particles are solely separated.

In an example embodiment, the first particle PTC1 may be such that about 2 to about 100 of the first primary particles are attached together. In this case, the first particle PTC1 may not be spherical, unlike the second particle PTC2, which is described below. The first particle PTC1 may be in an irregular form.

In an example embodiment, the first particle PTC1 may include a first coating layer on a surface thereof. The first coating layer may cover substantially the entire surface of the first particle PTC1, or a portion of the surface of the first particle PTC1. For example, the first coating layer may include carbon and/or a carbon-containing compound. The first coating layer may further include at least one of a titanium-containing compound, a magnesium-containing compound, and a vanadium-containing compound. Metal-containing compounds, such as at least one of titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium. The first particle PTC1 may have improved structural stability and electrical conductivity through the first coating layer.

The first particle PTC1 may have an average particle diameter in a range of about 50 nm to about 5 $\mu$m, about 100 nm to about 3 $\mu$m, about 500 nm to about 2.5 $\mu$m, or about 1 $\mu$m. In an example embodiment, the average particle diameter may be measured via a particle size analyzer. The average particle diameter may indicate a diameter (D50) of particles at a cumulative volume of about 50 vol% in a particle size distribution.

The minimum particle diameter of the first primary particle, that is, the particle diameter of the first primary particle, may be in a range of about 10 nm to about 800 nm, about 50 nm to about 400 nm, about 80 nm to about 200 nm, or about 100 nm to about 200 nm. In an example embodiment, the minimum particle diameter of the first primary particle, that is, the particle diameter of the first primary particle, may indicate a diameter measured by randomly selecting about 30 first primary particles on an electron micrograph of a positive electrode active material. The first primary particles may be substantially uniform in size.

The first particle PTC1 may include an olivine-based lithium compound represented by Formula 1 below.

Formula 1: $Li_{a1}Mn_{z1}Fe_{x1}B1_{y1}PO_{4-b1}$

In Formula 1 above, $0.8 \leq a1 \leq 1.2$, $0.5 \leq z1 \leq 0.899$, $0.1 \leq x1 \leq 0.499$, $0.001 \leq y1 \leq 0.05$, $0 \leq b1 \leq 0.05$, and $x1 + y1 + z1 = 1$ are satisfied.

In Formula 1 above, B is or includes at least one of Ti, Mg, V, Nb, and Al. B may be or include a dopant doped into the first particle PTC1. For example, B may include Ti.

The first particle PTC1 may further include carbon derived from the first coating layer described above. The carbon element content in the first particle PTC1 may be in a range of about 0.5 wt% to about 5 wt%, about 0.5 wt% to about 3 wt%, or about 0.5 wt% to about 2 wt%. The carbon content of the first particle PTC1 may be smaller than the carbon content of the first particle PTC2, which is described below. This is because the first particle PTC1 is a single particle, and may thus hardly allow the smooth formation of a coating layer compared to the second particle PTC2, which is a secondary particle. The content of carbon element included in the first particle PTC1 may be defined as the content of carbon element included in the first particle PTC1 with respect to the weight of the first particle PTC1. That is, the content of carbon element included in the first particle PTC1 may be defined as weight of carbon element included in the first particle PTC1 /weight of the first particle PTC1. The content of carbon element may be measured, for example, via carbon-sulfur analysis. However, methods of measuring are not limited to thereto.

Carbon element analysis according to embodiments of the present disclosure may be performed by an Elementar Micro Cube elemental analyzer. Particular operation method and conditions are as follows. About 1-2 mg of a sample is weighed in a tin cup, put in an automatic sampling tray, brought into a combustion tube via a ball valve, and burned at a combustion temperature of about 1000 °C. After that, the burned gas is reduced using reducing copper to form carbon dioxide. The carbon dioxide is detected using a TCD detector. In the method of measuring the carbon content according to embodiments of the present disclosure, scanning electron microscopy-energy dispersive X-ray spectroscopy (SEM-EDS) is performed with respect to the surface of the particles, and quantitative analysis is performed. As the method of measuring the carbon content, an inductively coupled plasma-mass spectrometry (ICP-MS), an inductively coupled plasma optical emission spectroscopy (ICP-OES) or the like may be used in addition to the SEM-EDS.

The first particles PTC1 may have a porosity that is greater than about 40%. Porosity (n) may be defined as the

$$n = \frac{V_p}{V_t}$$

pore volume ($V_p$) divided by the total volume (Vt) of a particle, or . A span value (e.g., (d90 - d10) / d50) of the first particle PTC1, analyzed through a particle size analyzer, may be deviated from a range from about 0.3 to about 0.75. The term "D10" as used herein, refers to the average diameter of particles when the cumulative percentage reaches 10% by volume in the particle size distribution, and the term "D90" as used herein, refers to the average diameter of particles when the cumulative percentage reaches 90% by volume in the particle size distribution.

### Second Particle PTC2

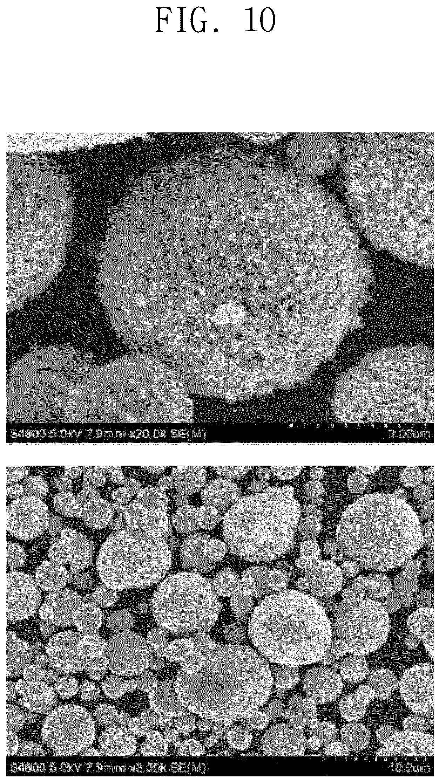

Referring to FIGS. 8 and 10, the second particle PTC2 is or includes a polycrystal, and may include a second secondary particle in which at least two second primary particles NNP are aggregated. That is, one second particle PTC2 may include a plurality of second primary particles NNP aggregated together. The second particle PTC2 may be substantially in the shape of a sphere or an oval.

In an example embodiment, the second particle PTC2 may include a second coating layer on a surface thereof. The second coating layer may substantially entirely cover the surface of the second particle PTC2, or may partially cover the surface of the second particle PTC2. For example, the second coating layer may include carbon and/or a carbon-containing compound. The second particle PTC2 may have improved structural stability and electrical conductivity through the second coating layer.

The second coating layer may further include at least one of a titanium-containing compound, a magnesium-containing compound, and a vanadium-containing compound. Metal-containing compounds, such as at least one of titanium-containing compounds, magnesium-containing compounds, and vanadium-containing compounds, may be or include, for example, at least one of metal oxides, metal hydroxides, metal carbonates, composites thereof, or mixtures thereof. The metal-containing compounds may further include other metals or non-metallic elements. For example, the metal-containing compounds may further include lithium.

In an example embodiment, the second particle PTC2 may further include a grain boundary coating layer on a surface of each, or of at least one, of the second primary particles NNP. The grain boundary coating layer may be present inside the second particle PTC2. The grain boundary coating layer may be formed to be applied along an interface between the second primary particles NNP inside the second particle PTC2. That is, the grain boundary coating layer may indicate a material applied onto a grain boundary inside the second particle PTC2. The grain boundary coating layer may include carbon and/or a carbon-containing compound. The grain boundary coating layer may further include at least one of a titanium-containing compound, a magnesium-containing compound, and a vanadium-containing compound.

The inside of the second particle PTC2 described above may indicate the entire inside portion of the second particle PTC2 excluding the surface of the second particle PTC2. For example, the inside of the second particle PTC2 may indicate a region of substantially the entire inside from about 10 nm in depth, or a region from about 10 nm to about 2 $\mu$m in depth, with respect to the surface of the second particle PTC2.

The second particle PTC2 may further include a grain boundary coating portion, and may thus have a greater structural stability and a substantially uniform coating layer formed on the surface thereof. In addition, the second particle PTC2 may further include a grain boundary coating portion, and may thus have further improved electrical conductivity.

The second particle PTC2 may have an average particle diameter in a range of about 2 $\mu$m to about 15 $\mu$m, about 3 $\mu$m to about 12 $\mu$m, or about 3 $\mu$m to about 7 $\mu$m. In an example embodiment, the particle diameter may be obtained by measuring a diameter by randomly selecting about 30 second particles PTC2 on an electron microscope image of a positive electrode active material, and taking a diameter (D50) of the particles at an accumulated volume of about 50 vol% in particle size distribution as the average particle diameter.

The minimum particle diameter of the second primary particles NNP included in the second particle PTC2, that is, the particle diameter of the second primary particles NNP, may be in a range of about 10 nm to about 400 nm, about 20 nm to about 300 nm, about 50 nm to about 200 nm, or about 50 nm to about 150 nm. In an example embodiment, the minimum particle diameter of the second primary particles NNP, that is, the particle diameter of the second primary particles NNP, may indicate a diameter measured by randomly selecting about 30 first primary particles on an electron micrograph of a positive electrode active material. The particle diameter of the second primary particles NNP may be substantially uniform.

The second particle PTC2 may include an olivine-based lithium compound represented by Formula 2 below.

$$\text{Formula 2:} \qquad Li_{a2}Mn_{z2}Fe_{x2}B2_{y2}PO_{4-b2}$$

In Formula 2 above, $0.8 \leq a2 \leq 1.2$, $0.5 \leq z2 \leq 0.899$, $0.1 \leq x2 \leq 0.499$, $0.001 \leq y2 \leq 0.05$, $0 \leq b2 \leq 0.05$, and $x2 + y2 + z2 = 1$ are satisfied.

B2 is or includes at least one of Ti, Mg, V, Nb, and Al. B2 may be or include a dopant with which the second particle PTC2 is doped. For example, B2 may include at least one of Ti and Mg.

The second particle PTC2 may further include carbon derived from the second coating layer and/or the grain boundary coating layer described above. The second particle PTC2 may have a carbon element content in a range of about 0.5 wt% to about 10 wt%, about 1 wt% to about 4 wt%, about 1 wt% to about 3 wt%, or about 1.5 wt% to about 2.5 wt%. As described above, the second particle PTC2 may contain a greater carbon content than the first particle PTC1. The content of carbon element included in the second particle PTC2 may be defined as the content of carbon element included in the second particle PTC2 with respect to the weight of the second particle PTC2. That is, the content of carbon element included in the second particle PTC2 may be defined as weight of carbon element included in the second particle PTC2/weight of the second particle PTC2. The content of carbon element may be measured, for example, via carbon-sulfur analysis. However, methods of measuring are not limited to thereto.

In an example embodiment of the present disclosure, in Formula 2 above, the second particle PTC2 may be substantially in the form of sphere in which nano-sized second primary particles NNP are aggregated. The second particle PTC2 has the second primary particles NNP closely aggregated, and may thus exhibit the following characteristics. The second particle PTC2 may be substantially in the shape of a sphere or an oval. The second particle PTC2 may have an average particle diameter (D50) in a range of about 2 $\mu$m to about 15 $\mu$m. The second particle PTC2 may have a porosity of about 30% to about 50% or about 20% to about 40%. Porosity (n) may be defined as the pore volume ($V_p$) divided by the

$$n = \frac{V_p}{V_t}$$

total volume (Vt) of a particle, or $\quad$ . A span value (e.g., (d90 - d10) / d50) of the second particle PTC2, analyzed via a particle size analyzer, may be about 0.3 to about 0.75.

### Third Particle PTC3

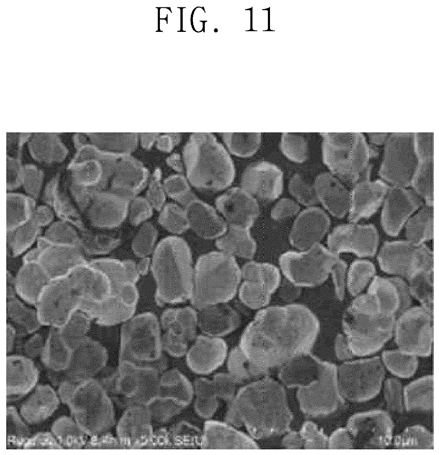

Referring to FIGS. 7 and 11, the third particle PTC3 may have a single particle form, like the above-described first particle PTC1. The description of the single particle may be the same as or similar to what is described above with respect to the first particle PTC1.

In an example embodiment, the third particle PTC3 may be or include a third primary particle where single particles are solely separated.

In an example embodiment, the third particle PTC3 may be such that about 2 to about 100 of the third primary particles are attached together. In this case, the third particle PTC3 may not be spherical, unlike the second particle PTC2. The third particle PTC3 may be in an irregular form.

In an example embodiment, the third particle PTC3 may include a third coating layer on a surface thereof. The third particle PTC3 includes the third coating layer, and may thus effectively reduce or prevent a structural collapse caused by repeated charging/discharging. Accordingly, rechargeable batteries may have improved lifetime characteristics.

The third coating layer may include at least one of a boron-containing compound, an aluminium-containing compound, or a combination thereof. Metal-containing compounds in the third coating layer may be or include, for example, at least one of metal oxides, metal hydroxides, metal carbonates, composites thereof, or mixtures thereof. The metal-containing compounds may further include other metals or non-metallic elements. For example, the third coating layer may further include at least one of lithium, manganese, and/or nickel.

A method of measuring the metal content in the third coating layer of the third particle PTC3 may include performing scanning electron microscopy and energy dispersive X-ray spectroscopy (SEM-EDS) on the third particle PTC3. Through the analysis described above, the content of boron and/or aluminium in the third coating layer may be determined. In addition to SEM-EDS, methods of measuring the metal content in the third coating layer may include inductively coupled plasma-mass spectrometry (ICP-MS), inductively coupled plasma optical emission spectroscopy (ICP-OES), and the like.

The third particle PTC3 may have an average particle diameter in a range of about 2 $\mu$m to about 10 $\mu$m, about 3 $\mu$m to about 8 $\mu$m, or about 5 $\mu$m to about 7 $\mu$m. The average particle diameter of the third particle PTC3 may be greater than the above-described average particle diameter of the first particle PTC1. In an example embodiment, the average particle diameter may be measured through a particle size analyzer. The average particle diameter may indicate a diameter (D50) of particles at a cumulative volume of about 50 vol% in a particle size distribution.

The minimum particle diameter of the third primary particle, that is, the particle diameter of the third primary particle, may be in a range of about 500 nm to about 5 $\mu$m, about 1 $\mu$m to about 4 $\mu$m, or about 1 $\mu$m to about 3 $\mu$m. In an example embodiment, when the third primary particle is substantially spherical, the particle diameter (minimum particle diameter) of the third primary particle may indicate a diameter measured by randomly selecting about 30 third primary particles on an electron micrograph of a positive electrode active material. When the third primary particle is non-spherical, the particle diameter (minimum particle diameter) of the third primary particle may indicate a diameter of a sphere having the volume as measured by randomly selecting about 30 third primary particles on an electron micrograph of a positive electrode active material.

The third particle PTC3 is or includes a nickel-based active material and includes lithium nickel-based composite oxide. For example, the third particle PTC3 may include a high nickel or mid nickel-based positive electrode active material containing a high or mid content of nickel. The high nickel-based positive electrode active material may achieve high capacity and high performance.

For example, the third particle PTC3 may include a layered lithium nickel-based composite oxide represented by Formula 3 below.

Formula 3: $\quad\quad$ $Li_{a3}Ni_{x3}Co_{y3}Mn_{z3}B3_{w3}O_{2-b3}$

In Formula 3 above, $0.8 \leq a3 \leq 1.2$, $0.4 \leq x3 \leq 0.8$, $0.01 \leq y3 \leq 0.2$, $0.01 \leq z3 \leq 0.5$, $0 \leq w3 \leq 0.1$, $0 \leq b3 \leq 0.05$, and $x3 + y3 + z3 + w3 = 1$ are satisfied, and in Formula 3 above, B3 is or includes at least one of Mg, Ti, V, Al, Zr, Mo, and Nb. B3 may be or include a dopant with which the third particle PTC3 is doped. In Formula 3 above, w3 being equal to 0 may indicate that there is no dopant element B3. That is, B3 may be omitted in Formula 3 above.

Referring back to FIG. 6, the positive electrode active material layer AML1 according to example embodiments of the present disclosure is described in more detail.

The positive electrode active material layer AML1 includes a first active material layer ATL1, and a second active material layer ATL2 stacked on the first active material layer ATL1.

The first active material layer ATL1 includes the first particle PTC1 and the third particle PTC3. The third particle PTC3 may include a high nickel or mid nickel-based positive electrode active material, and may thus achieve higher capacity than the first particle PTC1 containing an olivine-based positive electrode active material. In addition, the first active material layer ATL1 includes the third particle PTC3, and may thus improve pellet density, capacity, and energy density.

In an example embodiment, with respect to a total content of the first particle PTC1 and the third particle PTC3 in the first active material layer ATL1, an amount of the third particle PTC3 may be in a range of about 20 wt% to about 80 wt%, about 30 wt% to about 60 wt%, about 40 wt% to about 60 wt%, or about 50 wt% to about 60 wt%.

The first active material layer ATL1 may further include a first binder BND1 and a first conductive material CDM1.

The first particle PTC1 has a substantially small particle diameter, and accordingly, a large amount of the first binder BND1 may be sufficient to attach the first particle PTC1 to the current collector COL1 (see FIG. 1). For example, a relatively small amount of the first binder BND1 may be sufficient to attach the third particle PTC3 containing a high nickel or mid nickel-based positive electrode active material and having a relatively large particle diameter to the current collector COL1 (see FIG. 1). The first active material layer ATL1 further includes the third particle PTC3, and may thus be attached to the current collector COL1. That is, the content of the first binder BND1 in the first active material layer ATL1 may be reduced through the third particle PTC3.

In an example embodiment, with respect to 100 wt% of the first active material layer ATL1, an amount of the first binder BND1 may be in a range of about 2 wt% to about 5 wt%.

In an example embodiment, with respect to 100 wt% of the first active material layer ATL1, an amount of the first conductive material CDM1 may be in a range of about 5 wt% to about 10 wt%.

The second active material layer ATL2 includes the first particle PTC1 and the second particle PTC2.

The first particle PTC1, which is a single particle, may improve energy density, and the second particle PTC2, which is a secondary particle, may improve low-temperature characteristics and lifetime characteristics. The second active material layer ATL2 includes both the first particle PTC1 and the second particle PTC2, and may thus improve energy density, low-temperature characteristics, and lifetime characteristics all together.

In an example embodiment, with respect to a total content of the first particle and the second particle included in the second active material layer ATL2, an amount of the second particle PTC2 may be in a range of about 10 wt% to about 50 wt%, about 10 wt% to about 40 wt%, about 20 wt% to about 40 wt%, or about 30 wt% to about 40 wt%.

In particular, in the positive electrode active material layer AML1 of the present disclosure, low-temperature characteristics may be significantly improved by placing the second active material layer ATL2 containing the second particle PTC2 on a surface of a positive electrode in which electrochemical reactions take place most actively.

The second active material layer ATL2 may further include a second binder BND2 and a second conductive material CDM2.

The first particle PTC1 in the form of a single particle has a substantially small average particle diameter, and accordingly, a large amount of the first binder BND1 may be sufficient to attach the first particle PTC1 to the current collector COL1 (see FIG. 1) or to fix the first particle PTC1 onto the first conductive material CDM1. Meanwhile, the second particle PTC2 has a greater average particle diameter than the first particle PTC1, and accordingly, a relatively small amount of the second binder BND2 may be sufficient to attach the second particle PTC2 onto the first active material layer ATL1 or to fix the second particle PTC2 onto the second conductive material CDM2. Accordingly, the content of the second binder BND2 in the second active material layer ATL2 containing the second particle PTC2 may be reduced.

In an example embodiment, with respect to 100 wt% of the second active material layer ATL2, an amount of the second binder BND2 may be in a range of about 5 wt% to about 10 wt%.

In an example embodiment, with respect to 100 wt% of the second active material layer ATL2, an amount of the second conductive material CDM2 may be in a range of about 10 wt% to about 15 wt%.

When controlling the content of the first particle PTC1, the second particle PTC2, and the third particle PTC3 included in the positive electrode active material layer AML1 of the present disclosure, rechargeable lithium batteries having desired or improved energy density, low-temperature characteristics, and lifetime characteristics together may be achieved. For example, the first active material layer ATL1 of the positive electrode active material layer AML1 includes the first particle PTC1 and the third particle PTC3, and the second active material layer ATL2 includes the first particle PTC1 and the second particle PTC2.

In an example embodiment, with respect to 100 wt%, which is a total content of the first particle PTC1, the second particle PTC2, and the third particle PTC3 included in the positive electrode active material layer AML1, an amount of the second particle may be in a range of about 5 wt% to about 20 wt%.

In an example embodiment, with respect to 100 wt%, which is a total content of the first particle PTC1, the second particle PTC2, and the third particle PTC3 included in the positive electrode active material layer AML1, an amount of the third particle may be in a range of about 15 wt% to about 30 wt%, about 20 wt% to about 30 wt%, or about 25 wt% to about 30 wt%.

The first active material layer ATL1 may have a thickness T1 as illustrated in FIG. 6. In an example embodiment, T1 may increase with a rise in content of the first particle PTC1 and the third particle PTC3 included in the first active material layer ATL1. The second active material layer ATL2 may have a thickness T2, as also illustrated in FIG. 6. In an example embodiment, T2 may increase with a rise in content of the first particle PTC1 and the second particle PTC2 included in the second active material layer ATL2. In an example embodiment, a ratio of the size of T2 to T1 (T2/T1) may be in a range of about 0.8 to about 1.2 or about 0.9 to about 1.1. Within any of the ranges described above, low-temperature characteristics and lifetime characteristics may be improved while desired or improved energy density is maintained.

In an example embodiment, the first active material layer ATL1 may have a loading level in a range of about 5 $mg/cm^2$ to about 25 $mg/cm^2$. The second active material layer ATL2 may have a loading level in a range of about 5 $mg/cm^2$ to about 25 $mg/cm^2$.

In an example embodiment, the positive electrode active material layer AML1 of the present disclosure may have a compressed density in a range of about 2.4 g/cc to about 3.0 g/cc.

A rechargeable lithium battery including the positive electrode according to an example embodiment of the present disclosure may have improved energy density, low-temperature characteristics, and lifetime characteristics.

Hereinafter, Preparation Examples, Examples, and Comparative Examples of the present disclosure are described. However, the following Examples are presented only as an example embodiment of the present disclosure, and the present disclosure is not limited by the following Examples.

## Preparation Example 1: Preparation of First Particle in Single Particle Form (olivine-based active material)

A manganese iron phosphate precursor ($Mn_{0.6}Fe_{0.4}PO_4$), lithium carbonate, and titanium dioxide were mixed at a molar ratio of (Fe+Mn):Li:Ti of about 1:1.03:0.03. 12 wt% of glucose was added to the mixture. The mixture was subjected to a wet grinding process through ball milling. The mixture was evaporated to dryness on a heating tray and subsequently placed and dried in a vacuum oven at 120 °C for 4 hours. The dried mixture was fired at 750 °C for 10 hours in a nitrogen atmosphere. The fired product was ground to obtain a first particle in the form of a single particle. Using a scanning electron microscope (SEM), first primary particles constituting the first particle were each found to have a size (particle diameter) in a range of about 100 nm to about 200 nm, and the first particle was found to have an average particle diameter (D50) of about 1 μm as measured through a particle size analyzer. In addition, using scanning electron microscopy and energy dispersive X-ray spectroscopy (SEM-EDS), the primary particle of the first particle was found to contain 1.9 wt% of carbon.

## Preparation Example 2: Preparation of Second Particle in Secondary Particle Form (olivine-based active material)

A manganese iron phosphate precursor ($Mn_{0.6}Fe_{0.4}PO_4$), lithium carbonate, and titanium dioxide were mixed at a molar ratio of (Fe+Mn):Li:Ti of 1.03:0.03. 12 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain a second particle in the form of a secondary particle. Using a scanning electron microscope (SEM), second primary particles constituting the second particle were each found to have a size (particle diameter) in a range of about 50 nm to about 150 nm, and the second particle was found to have an average particle diameter (D50) of about 5 μm as measured through a particle size analyzer. In addition, using scanning electron microscopy and energy dispersive X-ray spectroscopy (SEM-EDS), the first particle was found to contain 2.20 wt% of carbon.

## Preparation Example 3: Preparation of Third Particle in Single Particle Form (layered active material)

A high nickel-based precursor was prepared using a coprecipitation method. For example, as raw materials for nickel-based metal hydroxide, nickel sulfate ($NiSO_4 \cdot 6H_2O$), cobalt sulfate ($CoSO_4 \cdot 7H_2O$), and manganese sulfate ($MnSO_4 \cdot H_2O$) were dissolved in distilled water as a solvent at a molar ratio of 60:10:30 to prepare a metal raw material mixture. The metal raw material mixture, aqueous ammonia, and sodium hydroxide were added into a reactor and subjected to a reaction. The slurry solution in the reactor was filtered and washed with high purity distilled water. The washed material was dried in a hot air oven at 210 °C for 24 hours to obtain a precursor ($Ni_{0.6}Co_{0.1}Mn_{0.3}(OH)_2$) powder

having an average particle diameter of about 6 μm.

The high nickel-based precursor and anhydrous lithium hydroxide (LiOH) were dry mixed using a Henschel mixer. Lithium and transition metal were mixed at a molar ratio of about 1:1. The transition metal is the sum total of transition metals contained in the high nickel-based precursor (Ni+Co+Mn). A melting agent was further added to the mixture, and the mixture was heat treated (i.e., firing process) at about 750 °C for 15 hours in an oxygen atmosphere to synthesize a third particle as a high nickel-based positive electrode active material. The third particle was ground using a jet mill at a pressure of 3 bar.

The third particle was added to distilled water and washed. Boron oxide and aluminium oxide corresponding to 3 mol% with respect to the total of transition metals in the third particle were added to perform boron and aluminium coating. The third particle was dried at about 150 °C for about 12 hours and was subjected to a heat treatment (i.e., surface treatment) at about 700 °C for 15 hours in an oxygen atmosphere.

## Example 1: Positive Electrode including First Active Material Layer and Second Active Material Layer

The first particle prepared through Preparation Example 1 and the third particle prepared through Preparation Example 3 were mixed at a weight ratio of 7:3 to prepare a first active material. The first particle prepared through Preparation Example 1 and the second particle prepared through Preparation Example 2 were mixed at a weight ratio of 9:1 to prepare a second active material.

The first active material, the first binder (polyvinylidene fluoride), and the first conductive material (carbon black) were dispersed in N-methylpyrrolidone at a weight ratio of 1:0.05:0.1 to prepare a first active material slurry.

The second active material, the second binder (polyvinylidene fluoride), and the second conductive material (carbon black) were dispersed in N-methylpyrrolidone at a weight ratio of 1:0.1:0.15 to prepare a second active material slurry.

The first active material slurry was applied onto a 15 μm thick aluminium (Al) thin film, which is a positive electrode current collector, and dried to form a first active material layer. The second active material slurry was applied onto the first active material layer and dried to form a second active material layer. In this case, the first active material layer and the second active material layer were formed such that the first active material and the second active material were present at a weight ratio of 1:1. Through a roll press, a positive electrode in which the aluminium current collector, the first active material layer, and the second active material layer were stacked in this order was prepared.

## Example 2: Positive Electrode including First Active Material Layer and Second Active Material Layer

A positive electrode was prepared in the same manner as in Example 1, with a difference that the first particle and the second particle were mixed at a weight ratio of 8:2 in the preparation of the second active material.

## Example 3: Positive Electrode including First Active Material Layer and Second Active Material Layer

A positive electrode was prepared in the same manner as in Example 1, with a difference that the first particle and the second particle were mixed at a weight ratio of 7:3 in the preparation of the second active material.

## Example 4: Positive Electrode including First Active Material Layer and Second Active Material Layer

A positive electrode was prepared in the same manner as in Example 1, with a difference that the first particle and the second particle were mixed at a weight ratio of 6:4 in the preparation of the second active material.

## Example 5: Positive Electrode including First Active Material Layer and Second Active Material Layer

A positive electrode was prepared in the same manner as in Example 4, with a difference that the first particle and the third particle were mixed at a weight ratio of 6:4 in the preparation of the first active material.

## Example 6: Positive Electrode including First Active Material Layer and Second Active Material Layer

A positive electrode was prepared in the same manner as in Example 4, with a difference that the first particle and the third particle were mixed at a weight ratio of 5:5 in the preparation of the first active material.

## Example 7: Positive Electrode including First Active Material Layer and Second Active Material Layer

A positive electrode was prepared in the same manner as in Example 4, with a difference that the first particle and the third particle were mixed at a weight ratio of 4:6 in the preparation of the first active material.

**Example 8: Positive Electrode including First Active Material Layer and Second Active Material Layer**

A positive electrode was prepared in the same manner as in Example 1, with a difference that the first particle and the third particle were mixed at a weight ratio of 4:6 in the preparation of the first active material.

**Comparative Example 1: Positive Electrode including Active Material Layer with Single Layer Structure (First Particle)**

The first particle prepared through Preparation Example 1, the first binder (polyvinylidene fluoride), and the first conductive material (carbon black) were dispersed in N-methylpyrrolidone at a weight ratio of 1:0.1:0.15 to prepare a positive electrode active material slurry.
The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 2: Positive Electrode including Active Material Layer with Single Layer Structure (Second Particle)**

The second particle prepared through Preparation Example 2, the second binder (polyvinylidene fluoride), and the second conductive material (carbon black) were dispersed in N-methylpyrrolidone at a weight ratio of 1:0.05:0.1 to prepare a positive electrode active material slurry.
The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 3: Positive Electrode including Active Material Layer with Single Layer Structure (Third Particle)**

The third particle prepared through Preparation Example 3, the first binder (polyvinylidene fluoride), and the first conductive material (carbon black) were dispersed in N-methylpyrrolidone at a weight ratio of 1:0.05:0.1 to prepare a positive electrode active material slurry.
The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 4: Positive Electrode including Active Material Layer with Single Layer Structure (Mixture of First Particle, Second Particle, and Third Particle)**

The first particles, the second particles, and the third particles prepared through Preparation Examples 1 to 3 were mixed at a weight ratio of 80:5:15 to prepare a mixed active material. The mixed active material, a binder (polyvinylidene fluoride), and a conductive material (carbon black) were dispersed in N-methylpyrrolidone at a weight ratio of 1:0.05:0.1 to prepare a positive electrode active material slurry. The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 5: Positive Electrode including Active Material Layer with Single Layer Structure**

The first particles, the second particles, and the third particles prepared through Preparation Examples 1 to 3 were mixed at a weight ratio of 50:20:30 to prepare a mixed active material. The mixed active material, a binder (polyvinylidene fluoride), and a conductive material (carbon black) were dispersed in N-methylpyrrolidone at a weight ratio of 1:0.05:0.1 to prepare a positive electrode active material slurry. The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

## Reference Example 6: Positive Electrode in which Content of Third Particle in First Active Material Layer is less than Certain Range

A positive electrode was prepared in the same manner as in Example 4, with a difference that the first particle and the third particle were mixed at a weight ratio of 8:2 in the preparation of the first active material.

## Comparative Example 7: Positive Electrode having First Active Material Layer Stacked on Second Active Material Layer

A positive electrode was prepared in the same manner as in Example 1, with a difference that the aluminium current collector, the second active material layer, and the first active material layer were stacked in this order.

## Preparation of Negative Electrode

Graphite (95 wt%), a binder (PVDF: 3 wt%), and a conductive material (carbon black: 2 wt%) were mixed in an N-methylpyrrolidone solvent to prepare a negative electrode active material slurry. The negative electrode active material slurry was applied onto a copper current collector, dried, and rolled to prepare a negative electrode.

## Preparation of Rechargeable Lithium Battery

A coin full cell was prepared using the positive electrode and the prepared negative electrode. A polypropylene film (Celgard 3510) was used as a separator. As an electrolyte, an electrolyte solution obtained by mixing 1.3 M $LiPF_6$ with a mixture solvent of ethylene carbonate (EC), diethyl carbonate (DEC), and fluoroethylene carbonate (FEC) (2:6:2 by volume ratio) was used.

## Evaluation Example 1: Analysis of Positive Electrode Active Material Surface

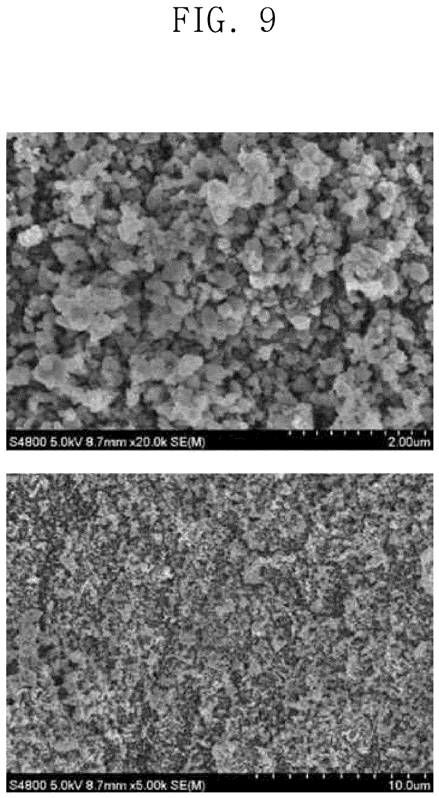

SEM images for the first, second, and third particles prepared in Preparation Examples 1 to 3 are shown in FIGS. 9 to 11. Referring to FIG. 9, the first particle according to an example embodiment of the present disclosure is in the form of a fine single particle having a size of several hundred nanometers. Referring to FIG. 10, the second particle according to an example embodiment of the present disclosure is in the form of a secondary particle having a size of several micrometers. The second particle is in the form of a secondary particle in which a plurality of primary particles are aggregated. Referring to FIG. 11, the third particle according to an example embodiment of the present disclosure is in the form of a single particle having a size of several micrometers.

## Evaluation Example 2: Analysis of Positive Electrode Properties

The content of each particle with respect to 100 wt%, which is a total content of active materials of positive electrodes according to Examples 1 to 8, Reference Example 6, and Comparative Examples 1 to 5, and 7 is shown in Table 1 below.

Table 1:

| Item | Composition | | Note |
|---|---|---|---|
| | First active material layer | Second active material layer | |
| **Example 1** | 35 wt% of first particle, 15 wt% of third particle | 45 wt% of first particle, 5 wt% of second particle | Second active material layer stacked on first active material layer |
| **Example 2** | 35 wt% of first particle, 15 wt% of second particle | 40 wt% of first particle, 10 wt% of second particle | Second active material layer stacked on first active material layer |
| **Example 3** | 35 wt% of first particle, 15 wt% of second particle | 35 wt% of first particle, 15 wt% of second particle | Second active material layer stacked on first active material layer |
| **Example 4** | 35 wt% of first particle, 15 wt% of second particle | 30 wt% of first particle, 20 wt% of second particle | Second active material layer stacked on first active material layer |
| **Example 5** | 30 wt% of first particle, 20 wt% of third particle | 30 wt% of first particle, 20 wt% of second particle | Second active material layer stacked on first active material layer |

(continued)

| Item | Composition | | Note |
|---|---|---|---|
| | First active material layer | Second active material layer | |
| **Example 6** | 25 wt% of first particle, 25 wt% of second particle | 30 wt% of first particle, 20 wt% of second particle | Second active material layer stacked on first active material layer |
| **Example 7** | 20 wt% of first particle, 30 wt% of second particle | 30 wt% of first particle, 20 wt% of second particle | Second active material layer stacked on first active material layer |
| **Example 8** | 20 wt% of first particle, 30 wt% of second particle | 45 wt% of first particle, 5 wt% of second particle | Second active material layer stacked on first active material layer |
| **Comparative Example 1** | 100 wt% of first particle | | Single layer |
| **Comparative Example 2** | 100 wt% of second particle | | Single layer |
| **Comparative Example 3** | 100 wt% of third particle | | Single layer |
| **Comparative Example 4** | 80 wt% of first particle, 5 wt% of second particle, 15 wt% of third particle | | Single layer |
| **Comparative Example 5** | 50 wt% of first particle, 20 wt% of second particle, 30 wt% of third particle | | Single layer |
| **Reference Example 6** | 40 wt% of first particle, 10 wt% of third particle | 30 wt% of first particle, 20 wt% of second particle | Second active material layer stacked on first active material layer |
| **Comparative Example 7** | 35 wt% of first particle, 15 wt% of second particle | 45 wt% of first particle, 5 wt% of second particle | First active material layer stacked on second active material layer |

Thickness and pellet density (PD) of each of the positive electrode active materials of the prepared positive electrode were measured, and the results are shown in Table 2 below.

Table 2:

| Item | Form of active material layer | Thickness | | | Pellet density (g/cc) |
|---|---|---|---|---|---|
| | | Thickness of first active material | Thickness of second active material | Total thickness of active materials ($\mu$m) | |
| **Example 1** | Double layer | 25 | 25 | 50 | 2.51 |
| **Example 2** | Double layer | 25 | 25 | 50 | 2.49 |
| **Example 3** | Double layer | 25 | 25 | 50 | 2.47 |
| **Example 4** | Double layer | 25 | 25 | 50 | 2.45 |
| **Example 5** | Double layer | 25 | 25 | 50 | 2.47 |
| **Example 6** | Double layer | 25 | 25 | 50 | 2.49 |
| **Example 7** | Double layer | 25 | 25 | 50 | 2.51 |
| **Example 8** | Double layer | 25 | 25 | 50 | 2.54 |
| **Comparative Example 1** | Single layer | 50 | 0 | 50 | 2.3 |
| **Comparative Example 2** | Single layer | 0 | 50 | 50 | 1.9 |
| **Comparative Example 3** | Single layer | - | - | 50 | 3.14 |
| **Comparative Example 4** | Single layer | - | - | 50 | 2.55 |
| **Comparative Example 5** | Single layer | - | - | 50 | 2.57 |

(continued)

| Item | Form of active material layer | Thickness | | | Pellet density (g/cc) |
|---|---|---|---|---|---|
| | | Thickness of first active material | Thickness of second active material | Total thickness of active materials (μm) | |
| Reference Example 6 | Double layer | 25 | 25 | 50 | 2.42 |
| Comparative Example 7 | Double layer | 25 | 25 | 50 | 2.5 |

Evaluation Example 3: Evaluation of Battery Properties

Properties of rechargeable lithium batteries prepared using the positive electrodes of Examples 1 to 8, Reference Example 6, and Comparative Examples 1 to 5 and 7 were evaluated.

For initial charging/discharging, the rechargeable lithium batteries were initially charged at a constant current of 0.1 C and a constant voltage of 4.5 V, and after 10 minutes of rest, discharged up to 3.0 V at a constant current of 0.1 C, and the initial discharge capacity was subsequently measured, and in this case, the ratio of discharge capacity to charge capacity was calculated as efficiency. The results (charge amount, discharge amount, efficiency) are shown in Table 3 below.

In addition, the charging/discharging was repeated 50 times at 1.0 C/1.0 C and 45 °C to measure discharge capacity at the 50th cycle, and the ratio of the 50th discharge capacity to the initial discharge capacity was subsequently evaluated, and the results (lifetime at 4.5 V) are shown in Table 3 below.

In addition, a coin cell was additionally prepared and measured at -20 °C for a capacity of 0.2 C. The results of evaluating the battery properties are shown in Table 3 below.

Table 3:

| Item | Charge at 4.5 V (mAh/g) | Discharge at 4.5 V (mAh/g) | Efficiency at 4.5 V (%) | Lifetime at 4.5 V (%, 50 cycles) | Capacity at -20 °C (mAh/g) | Energy density (Wh/L) | Average voltage (V) |
|---|---|---|---|---|---|---|---|
| Example 1 | 166.4 | 153.6 | 92.3 | 96.3 | 117.1 | 1488 | 3.86 |
| Example 2 | 166.6 | 153.9 | 92.4 | 94.2 | 119.5 | 1479 | 3.86 |
| Example 3 | 166.7 | 154.3 | 92.6 | 92.1 | 120.5 | 1471 | 3.86 |
| Example 4 | 166.9 | 154.6 | 92.6 | 90.5 | 121.6 | 1462 | 3.86 |
| Example 5 | 169.5 | 155.9 | 92.0 | 91.3 | 122.2 | 1483 | 3.85 |
| Example 6 | 171.5 | 156.1 | 91.0 | 92 | 122.6 | 1493 | 3.84 |
| Example 7 | 173.7 | 157.3 | 90.6 | 92.6 | 123.5 | 1508 | 3.82 |
| Example 8 | 172.1 | 155.1 | 90.1 | 95.3 | 119.2 | 1505 | 3.82 |
| Comparative Example 1 | 156.5 | 145.6 | 93 | 96.5 | 107.1 | 1306 | 3.9 |
| Comparative Example 2 | 159.9 | 152.6 | 95.4 | 72.4 | 126.7 | 1131 | 3.9 |
| Comparative Example 3 | 221.3 | 196.3 | 88.7 | 94.6 | 157.0 | 2250 | 3.65 |
| Comparative Example 4 | 165.8 | 151.7 | 91.5 | 91.5 | 110.2 | 1493 | 3.86 |
| Comparative Example 5 | 172.9 | 152.6 | 88.3 | 87.9 | 115.4 | 1498 | 3.82 |
| Comparative Example 6 | 163.5 | 151.5 | 92.7 | 88.8 | 123.2 | 1423 | 3.88 |
| Comparative Example 7 | 165.5 | 149.7 | 90.5 | 91.5 | 112.5 | 1445 | 3.86 |

Referring to Table 3, the rechargeable batteries according to Examples 1 to 8 of the present disclosure are significantly superior to the rechargeable batteries according to Comparative Examples 1 and 2 in energy density. In addition, the rechargeable batteries according to Examples 1 to 8 are superior to the rechargeable battery according to Comparative Example 1 in capacity at -20 °C (low-temperature characteristics), significantly superior to the rechargeable battery according to Comparative Example 2 in lifetime characteristics, and significantly superior to the rechargeable battery according to Comparative Example 3 in cell efficiency.

The rechargeable batteries according to Examples 1 to 8 have an energy density of 1450 Wh/L or greater, maintain a capacity of about 120 mAh/g at -20 °C, and maintain a lifetime of 90% or greater even after 50 times of charging and discharging, and thus have desired or improved low-temperature characteristics, lifetime characteristics, and cell efficiency all together.

In addition, the rechargeable batteries according to Examples 1 to 8 are superior to the rechargeable batteries according to Comparative Examples 4 and 5 each having a single layered active material layer in initial charge/discharge efficiency, lifetime characteristics, and low-temperature characteristics all together.

In addition, the rechargeable battery according to Example 1 is superior to the rechargeable battery according to Comparative Example 7 in initial charge/discharge efficiency, lifetime characteristics, and low-temperature characteristics all together. That is, the rechargeable battery of Comparative Example 7, which has a double layer structure but which stacking order is reversed from the stacking order of the double layered active material layer of Example 1, has somewhat poor initial charge/discharge efficiency, lifetime characteristics, and low-temperature characteristics.

A positive electrode according to the present disclosure has a double layer structure in which a second active material layer containing a mixture of an olivine-based particle in the form of a single particle and an olivine-based particle in the form of a secondary particle is stacked on a first active material layer having a mixture of an olivine-based particle and a layered particle, and may thus have improved energy density, low-temperature characteristics, and lifetime characteristics.

## Claims

1.    A positive electrode for a rechargeable lithium battery, the positive electrode comprising:

a current collector; and
an active material layer on the current collector,
wherein the active material layer includes a first particle, a second particle, and a third particle,
the active material layer includes a first active material layer and a second active material layer, which are stacked on the current collector,
the first active material layer includes the first particle and the third particle,
the second active material layer includes the first particle and the second particle,
the first particle is in the form of a single particle, and the second particle is in the form of a secondary particle, and
the first particle contains a compound of Formula 1, the second particle contains a compound of Formula 2, and the third particle contains a compound of Formula 3:

Formula 1:    $Li_{a1}Mn_{z1}Fe_{x1}B1_{y1}PO_{4-b1}$

wherein in Formula 1 above, $0.8 \leq a1 \leq 1.2$, $0.5 \leq z1 \leq 0.899$, $0.1 \leq x1 \leq 0.499$, $0.001 \leq y1 \leq 0.05$, $0 \leq b1 \leq 0.05$, and $x1 + y1 + z1 = 1$ are satisfied, and
in Formula 1, B1 comprises at least one of Ti, Mg, V, Nb, and Al,

Formula 2:    $Li_{a2}Mn_{z2}Fe_{x2}B2_{y2}PO_{4-b2}$

wherein in Formula 2 above, $0.8 \leq a2 \leq 1.2$, $0.5 \leq z2 \leq 0.899$, $0.1 \leq x2 \leq 0.499$, $0.001 \leq y2 \leq 0.05$, $0 \leq b2 \leq 0.05$, and $x2 + y2 + z2 = 1$ are satisfied, and
in Formula 2, B2 comprises at least one of Ti, Mg, V, Nb, and Al, and

Formula 3:    $Li_{a3}Ni_{x3}Co_{y3}Mn_{z3}B3_{w3}O_{2-b3}$

wherein in Formula 3 above, $0.8 \leq a3 \leq 1.2$, $0.4 \leq x3 \leq 0.8$, $0.01 \leq y3 \leq 0.2$, $0.01 \leq z3 \leq 0.5$, $0 \leq w3 \leq 0.1$, $0 \leq b3 \leq 0.05$, and $x3 + y3 + z3 + w3 = 1$ are satisfied, and
in Formula 3, B3 comprises at least one of Mg, Ti, V, Al, Zr, Mo, and Nb.

2.  The positive electrode for a rechargeable lithium battery of claim 1, wherein with respect to a total content of the first particle and the third particle included in the first active material layer, an amount of the third particle is in a range of about 30 wt% to about 60 wt%.

3.  The positive electrode for a rechargeable lithium battery of claim 1 or claim 2, wherein with respect to a total content of the first particle and the second particle included in the second active material layer, an amount of the second particle is in a range of about 10 wt% to about 40 wt%.

4.  The positive electrode for a rechargeable lithium battery of any one of claims 1 to 3, wherein the second active material layer has a thickness in a range of about 0.8 to about 1.2 with respect to a thickness of the first active material layer.

5.  The positive electrode for a rechargeable lithium battery of any one of claims 1 to 4, wherein the first particle has an average particle diameter (D50) in a range of about 0.5 $\mu$m to about 2.5 $\mu$m.

6.  The positive electrode for a rechargeable lithium battery of any one of claims 1 to 5, wherein the second particle has an average particle diameter (D50) in a range of about 3 $\mu$m to about 7 $\mu$m.

7.  The positive electrode for a rechargeable lithium battery of any one of claims 1 to 6, wherein the second particle comprises a plurality of second primary particles aggregated together, and
    the second primary particles have a particle diameter in a range of about 50 nm to about 150 nm.

8.  The positive electrode for a rechargeable lithium battery of any one of claims 1 to 7, wherein the second particle comprises a second coating layer containing carbon, and
    the second particle contains about 1.5 wt% to about 2.5 wt% of carbon.

9.  The positive electrode for a rechargeable lithium battery of any one of claims 1 to 8, wherein the second particle has a porosity in a range of about 20% to about 40%.

10. The positive electrode for a rechargeable lithium battery of any one of claims 1 to 9, wherein a span value of the second particle is in a range of about 0.3 to about 0.75.

11. The positive electrode for a rechargeable lithium battery of any one of claims 1 to 10, wherein the first active material layer and the second active material layer have a loading level in a range of about 5 mg/cm$^2$ to about 25 mg/cm$^2$.

12. The positive electrode for a rechargeable lithium battery of any one of claims 1 to 11, wherein the third particle has an average particle diameter (D50) in a range of about 2 $\mu$m to about 10 $\mu$m.

13. The positive electrode for a rechargeable lithium battery of any one of claims 1 to 12, wherein the third particle comprises a third coating layer, and
    the third coating layer comprises at least one of a boron-containing compound and an aluminium-containing compound.

14. The positive electrode for a rechargeable lithium battery of any one of claims 1 to 13, wherein with respect to 100 wt% of the first active material layer, an amount of the first binder is in a range of about 2 wt% to about 5 wt%, and
    with respect to 100 wt% of the second active material layer, an amount of the second binder is in a range of about 5 wt% to about 10 wt%.

15. A rechargeable lithium battery comprising the positive electrode according to any one of claims 1 to 14.

# FIG. 1

# FIG. 2

FIG. 3

# FIG. 4

# FIG. 5

# FIG. 6

# FIG. 7

ATL1

FIG. 8

# FIG. 9

# FIG. 10

FIG. 11

Europäisches
Patentamt

European
Patent Office

Office européen
des brevets

## EUROPEAN SEARCH REPORT

**Application Number**

EP 25 17 1694

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 842 114 A (NINGDE CONTEMPORARY AMPEREX TECH CO LTD) 24 March 2023 (2023-03-24) | 1,2,4-7, 12-15 | INV. H01M4/131 H01M4/36 |
| A | * examples 1-8 * * table 1 * * claims 1-3,6 * | 3,8-11 | H01M4/525 H01M4/58 H01M4/62 |
| X,P | & US 2024/282938 A1 (ZHU YINGHUA [CN] ET AL) 22 August 2024 (2024-08-22) | 1,2,4-7, 12-15 | H01M10/0525 |
| A,P | * examples 1-8 * * table 1 * * claims 1-3,6 * | 3,8-11 | ADD. H01M4/02 |
| A | US 2020/350567 A1 (HA JAEHWAN [KR] ET AL) 5 November 2020 (2020-11-05) * examples 1,2 * | 1-15 | |
| A | CN 109 428 051 A (NINGDE CONTEMPORARY AMPEREX TECH CO LTD) 5 March 2019 (2019-03-05) * example 3 * | 1-15 | |
| A | US 2018/097222 A1 (OSHITARI SATORU [JP] ET AL) 5 April 2018 (2018-04-05) * example 1 * | 1-15 | **TECHNICAL FIELDS SEARCHED (IPC)** H01M |

The present search report has been drawn up for all claims

| Place of search | Date of completion of the search | Examiner |
|---|---|---|
| The Hague | 28 August 2025 | Knoflacher, Andreas |

EPO FORM 1503 03.82 (P04C01)

## ANNEX TO THE EUROPEAN SEARCH REPORT
## ON EUROPEAN PATENT APPLICATION NO.

EP 25 17 1694

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2025

| Patent document cited in search report | | Publication date | Patent family member(s) | | Publication date |
|---|---|---|---|---|---|
| CN 115842114 | A | 24-03-2023 | CN | 115842114 A | 24-03-2023 |
| | | | EP | 4411880 A1 | 07-08-2024 |
| | | | US | 2024282938 A1 | 22-08-2024 |
| | | | WO | 2023174012 A1 | 21-09-2023 |
| US 2020350567 | A1 | 05-11-2020 | CN | 111883816 A | 03-11-2020 |
| | | | EP | 3734704 A1 | 04-11-2020 |
| | | | KR | 20200127788 A | 11-11-2020 |
| | | | US | 2020350567 A1 | 05-11-2020 |
| CN 109428051 | A | 05-03-2019 | NONE | | |
| US 2018097222 | A1 | 05-04-2018 | JP | 6168225 B1 | 26-07-2017 |
| | | | JP | 2018056037 A | 05-04-2018 |
| | | | US | 2018097222 A1 | 05-04-2018 |

EPO FORM P0459

For more details about this annex : see Official Journal of the European Patent Office, No. 12/82